# EUROPEAN PATENT SPECIFICATION

(11) **EP 3 599 838 B1**
(45) Date of publication and mention of the grant of the patent: **08.09.2021**
(21) Application number: 18711181.0
(22) Date of filing: 02.03.2018
(51) Int. Cl.: A01K 9/00

(54) **SYSTEM FOR GIVING FEED TO ANIMALS**
SYSTEM ZUM FÜTTERN VON TIEREN
SYSTÈME PERMETTANT DE DONNER DES ALIMENTS À DES ANIMAUX

(30) Priority: 27.03.2017 NL 2018584
(43) Date of publication of application: 05.02.2020
(73) Proprietor: Wennemars B.V., 7722 TA Dalfsen (NL)
(72) Inventor: WENNEMARS-GERRITSEN, Reinetta Maria Geertruida, 7722 TA Dalfsen (NL)
(74) Representative: Van Breda, Jacobus
(86) International application number: PCT/NL2018/050131
(87) International publication number: WO 2018/182403

(56) References cited:
- EP-A1- 0 744 890
- US-A- 1 972 375
- US-A- 2 708 421
- US-A- 3 043 265
- US-A1- 2010 313 816

## Description

The present invention relates to a feeding system for animals provided with a holder which is part of the system and from which the animals can withdraw the feed.

Such a feeding system is generally known and comprises a holder which is provided with liquid feed. Examples of such a feeding system are disclosed by US 2 708 421, US 1 972 375, US2010/313816, US 3 043 265, and EP 0 744 890.

The outer wall of the holder has an opening which is situated above the bottom of the holder and which accommodates a teat through which young animals, such as newborn calves, can withdraw the feed from the holder by sucking the teat.

The teat may be of a type disclosed in, for example, EP-0744890 A1. When the last bit of feed has been withdrawn from the - generally suspended- holder, in particular the inside of the holder should be cleaned, particularly the bottom of the holder where, as in the teat, always a small amount of milk is left. This is to preclude feed residues from attaching in the holder and/or teat, allowing disease-causing bacteria to thrive.

A drawback of the known feeding system resides in that said cleaning operation is a chore which is not always carried properly and hygienically, particularly at the bottom of the holder where also the teat is inserted into the opening in the wall of the holder. Consequently, feed residues are left in the holder particularly around the teat, bringing about an increased risk of infection and transmission of diseases among the vulnerable young animals.

It is an object of the present invention to provide an improved feeding system and teat which provide a lower risk of infection and which, in addition, can be cleaned more effectively in a simpler way requiring fewer actions.

To achieve this, the feeding system according to the invention has the characteristics of claim 1.

The at least one wall around the opening is provided with a cavity at the inside wall of the holder in which a connecting flange of the teat situated opposite the suction end of said teat can be fitted, the feeding system of the invention is characterized in that the connecting flange of the teat inserted into the recess has a flat circumferential part which rests on the recessed bottom part.

By virtue of said flat -tangential- circumferential part, the flange of the teat can be inserted into the cavity in one position only. This is advantageous in the case of teats having at the suction end a normally closed, animal-operated cut, which is mostly vertically oriented, wherein the cut is made to open and feed can be drawn in by the animal exerting forces in one plane only. Said one position ensures that the inserted teat is in the proper position and that said forces act properly on the cut, thereby causing it to open so that feed can be drawn in.

Because, in addition, the flat circumferential part of the connecting flange of the teat is located at the recessed circumferential part of the holder so as to rest thereon, the opening of the passage in the teat is located near said circumferential part, allowing an animal to draw in even the last bit of milk.

Another advantage of the feeding system according to the invention resides in that feed residue will accumulate in particular in the recessed bottom part. The opening in the wall, where as much as possible of said feed residue is sucked away by an animal through the teat, borders on this bottom part. Any remaining feed residue is very small in quantity and is present only in the recessed bottom part. As a result, a smaller quantity of feed residue has to be removed in the cleaning process, resulting in a simplified, speedier cleaning process without the effectiveness being adversely affected.

In embodiments of the feeding system according to the invention, the bottom slopes downwards towards the recessed bottom part, which can also be achieved by tilting the holder or due to the fact that the bottom extends obliquely towards the recessed bottom part.

Advantageously, the holder accommodates in the cavity the generally detachable connecting flange of the teat. In practice, the teat is recessed in said cavity such that the surface of the connecting flange located at the inner wall of the holder is flush with the surface of said inner wall. By virtue of said recessed position, milk residues cannot accumulate around the teat and there is less feed residue, while, in addition, cleaning is made easier by the fact that said surfaces blend into each other so as to be level with each other.

The teat has a suction end and a radial connecting flange opposite said suction end, wherein said connecting flange comprises a flat -tangential- circumferential part and inside the connecting flange there is a passage with an opening which extends towards the suction end of the teat.

A preferred embodiment is characterized in that, viewed from the suction end of the teat to the connecting flange, the passage constitutes an unobstructed open passage.

This has the advantage that a small amount of residual milk and/or rinsing water can flow from the open passage to the holder, which makes it easier to keep the teat clean.

The feeding system according to the present invention will now be explained in greater detail with reference to the figures mentioned below, in which corresponding parts are indicated by means of the same reference numerals.
In the figures:
Figure 1 is an exterior view of the holder according to the invention for liquid animal feed;
Figure 2 and figure 2a show respective interior views of the holder shown in figure 1;
Figures 3a and 3b show, respectively, a front view and a side view of a teat comprising a connecting flange which is to provided in a cavity around an opening in the wall of the holder shown in figures 1, 2 and 2a;
Figure 4 shows a top view of the connecting flange of the teat shown in figures 3a and 3b, which connecting flange is to be provided in the opening and the cavity in the wall of the holder shown in figures 1, 2 and 2a; and
Figures 5, 5a and 5b show details of a holder according to the invention, which forms a group feeder having a plurality of openings from which a plurality of calves can suck milk simultaneously through teats.

The above-mentioned Figures show a feeding system 1, 2 for animals comprising, respectively, a holder 1 for liquid feed and a teat 2 which can generally be detachably coupled to the holder. The holder 1, which can be filled with, for example, milk and which can be made of synthetic resin or rubber, comprises at least a wall 3 and a bottom 4 situated below the at least one wall 3. What is shown here is an embodiment of the holder 1 which, by virtue of having four rounded edges, comprises walls 3 which, preferably smoothly, blend into each other, enabling the interior of the holder 1 including the bottom 4 to be cleaned in a simple manner. Embodiments having a different number of walls or, for example, one cylindrical or elliptical inner wall 3 are also possible.

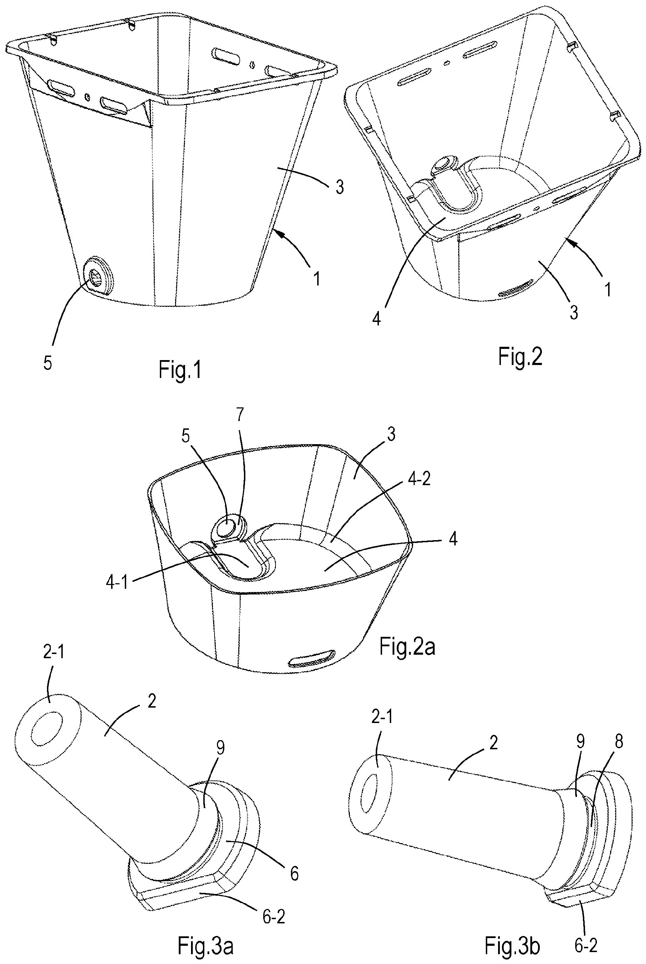

As shown in figure 2a, the bottom 4 comprises at least a recessed bottom part 4-1 which extends as far as the bottom circumference 4-2. The at least one wall 3 has a wall opening 5 which is partially adjacent to the recessed bottom part 4-1.

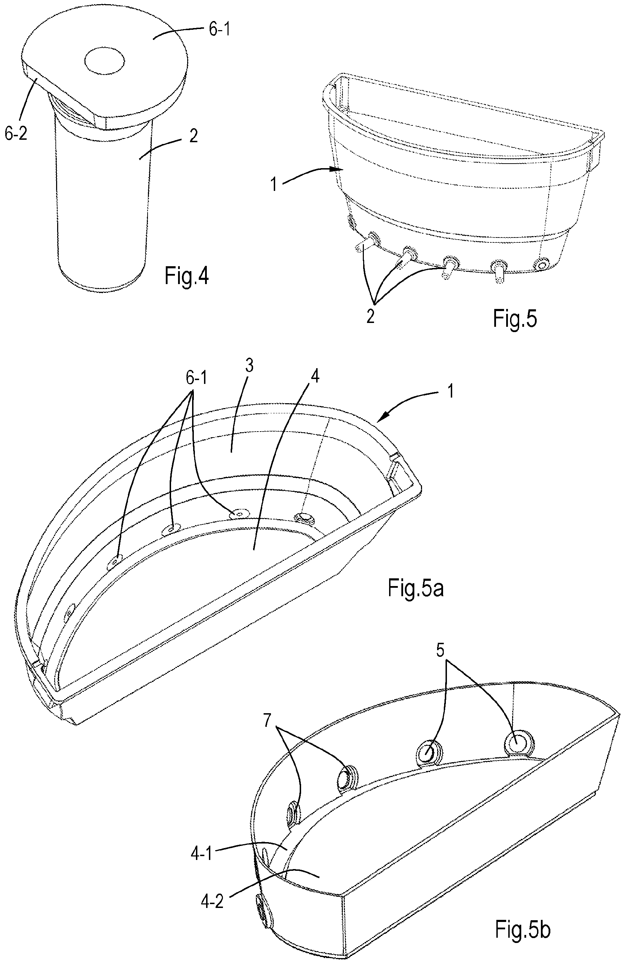

The teat 2 separately shown in figures 3a, 3b and 4 has an interior passage, not shown, for the liquid feed, said passage extending from the suction end 2-1 of the teat to a radially extending connecting flange 6 located opposite said suction end and being used to fit the teat 2 in the opening 5. The suction end 2-1 may comprise a valve or a shut-off, if necessary, which can be operated by a sucking animal, and which precludes that liquid trickles out of the holder 1. The passage, viewed from the suction end 2-1 of the teat 2 to the connecting flange 6, forms preferably an unobstructed, open passage to the bottom part 4-1, which is recessed with respect to the bottom 4. By virtue thereof, no milk and/or rinsing water remain in the passage, and in addition the teat 2 can be cleaned properly. Said teat 2, which is preferably made of a flexible synthetic resin or rubber, is positioned relative to the recessed bottom part 4-1 such that liquid feed accumulated on said recessed bottom part can be drawn to the suction end 2-1 of the teat through the passage. In short, any remaining milk flows into the recessed bottom part 4-1, from where it is sucked by a calf, so that only a very small amount of feed is wasted and only little feed is lost during the cleaning process.

In any one of the elucidated embodiments, the holder 1 can be tilted in the direction of the recessed bottom part 4-1 and/or the bottom 4 can be inclined and slope downwards towards said at least one bottom part 4-1.

In the preferred embodiment shown, the feeding system comprises a cavity 7 which is situated around the opening 5 at the inside wall 3 of the holder 1, and the connecting flange 6 of the teat 2 can be detachably fitted in said cavity. After coupling the flange 6 into the opening 5, said flange 6 fills the cavity 7 preferably entirely, and is recessed in said cavity 7.

In an embodiment which is very easy to clean, the surface 6-1 of the flange 6 shown in figure 4 is in one plane with the surface of the inside wall 3 of the holder 1. By virtue thereof, hardly any milk accumulates around the circumference of the flange and said mutually flush, smooth surfaces on the inside of the holder 1 are easy to clean.

Figures 3a, 3b and 4 also show an embodiment in which the circumference of the flange has a flat - tangential- part 6-2, which, after the teat 2 has been tightly fitted in the opening 5 of the holder 1, rests on the recessed bottom part 4-1. Thus, the shape of the cavity 7 is adapted in particular to the external shape of the flange 6 and the circumference of the flange, so that there is only one way in which the teat 2 can be tightly fitted in a leak-proof manner in the opening 5. In this position of the teat 2, a sucking animal can optimally operate a valve or shut-off in the suction end 2-1 of the teat 2.

Figure 3b shows that the teat 2 has an indentation 8 which, after coupling the teat to the holder 1, is sandwiched between, viewed in the longitudinal direction, a circumferentially radially protruding thickening 9 and the connecting flange 6 of the teat 2. The indentation 8 is a leak-proof tight fit in the opening 5.

Figures 5, 5a and 5b each show a detail of an embodiment in which the holder 1 is a so-termed group feeder. The wall 3 is provided with a plurality of openings 5, enabling a plurality of calves to suck milk simultaneously from teats (not shown here). In this case, the underlying bottom 4 may comprise a corresponding number of recessed individual or interconnected bottom parts 4-1, which all extend as far as the circumference 4-2 of the bottom. Also in this case, each of the openings 5 has portions which, at the location of the bottom circumference 4-2, are adjacent to the respective lowest recessed bottom part 4-1 or recessed bottom circumference 4-2, as shown here.

## Claims

1. A feeding system for animals comprising:
- a holder (1) for liquid feed comprising at least a wall (3) and an underlying bottom (4) having a recessed bottom part (4-1) which extends as far as the bottom circumference (4-2), said wall (3) having an opening (5) which is partly adjacent to said recessed bottom part (4-1), and
- at least a teat (2) having a passage to a suction end (2-1), which teat (2) is to be fitted in said opening (5) and is positioned relative to said recessed bottom part (4-1) such that any feed collected on said recessed bottom part (4-1) can flow through the passage to the suction end (2-1) of the teat,
- wherein said wall (3) around the opening (5) is provided with a cavity (7) at the inside wall (3) of the holder (1) in which a connecting flange (6) of the teat (2) situated opposite the suction end (2-1) of said teat (2) is to be fitted,
**characterized in that** the connecting flange (6) of the teat (2) inserted into the cavity (7) has a flat circumferential part (6-2) which rests on the recessed bottom part (4-1).

2. The feeding system according to claim 1, **characterized in that** the bottom (4) slopes downwards towards the recessed bottom part (4-1) and/or said recessed bottom part (4-1) slopes downwards towards a locally recessed bottom circumference (4-2).

3. The feeding system according to claim 1 or 2, **characterized in that** the holder (1) can be tilted or is tilted such that the bottom (4) slopes downwards towards the recessed bottom part (4-1).

4. The feeding system according to any one of claims 1 - 3, **characterized in that** the connecting flange (6) of the teat (2) is shaped such that said connecting flange (6) is recessed in the cavity (7) and completely fills said cavity.

5. The feeding system according to claim 4, **characterized in that** the connecting flange (6) of the teat (2) inserted into the cavity (7) forms a surface at said wall (3) of the holder (1) which is substantially in one plane with the surface of the inside wall (3) of the holder (1) .

6. The feeding system according to any one of claims 1 - 5, **characterized in that** the teat (2) has an indentation (8) which is sandwiched between a circumferentially radially protruding thickening (9) and the connecting flange (6) of the teat (2), and, around the opening (5), the inside wall (3) of the holder (1) is a, preferably detachable, leak-proof tight fit in said indentation (8).

7. The feeding system according to any one of claims 1 - 6, **characterized in that,** at the location of the suction end (2-1), the teat (2) is provided with a valve or shut-off which can be operated by a sucking animal.

8. The feeding system according to any one of claims 1 - 7, **characterized in that** the holder (1) is made of synthetic resin or rubber, and the teat (2) is made of an elastic synthetic resin or rubber.

## Patentansprüche

1. Fütterungssystem für Tiere, umfassend:
- einen Halter (1) für flüssiges Futter, der mindestens eine Wand (3) und einen darunter liegenden Boden (4) umfasst, der einen vertieften Bodenteil (4-1) aufweist, welcher sich bis zu dem Bodenumfang (4-2) erstreckt, wobei die Wand (3) eine Öffnung (5) aufweist, welche teilweise an den vertieften Bodenteil (4-1) angrenzt, und
- mindestens eine Zitze (2), die einen Durchgang zu einem Saugende (2-1) aufweist, wobei die Zitze (2) in die Öffnung (5) eingepasst werden soll und relativ zu dem vertieften Bodenteil (4-1) so positioniert ist, dass jegliches Futter, das sich auf dem vertieften Bodenteil (4-1) angesammelt hat, durch den Durchgang zu dem Saugende (2-1) der Zitze fließen kann,
- wobei die Wand (3) um die Öffnung (5) herum mit einem Hohlraum (7) an der Innenwand (3) des Halters (1) versehen ist, in welchen ein Verbindungsflansch (6) der Zitze (2), die gegenüber dem Saugende (2-1) der Zitze (2) liegt, eingepasst werden soll,
**dadurch gekennzeichnet, dass** der Verbindungsflansch (6) der in den Hohlraum (7) eingesetzten Zitze einen flachen umlaufenden Teil (6-2) aufweist, welcher auf dem vertieften Bodenteil (4-1) aufliegt.

2. Fütterungssystem nach Anspruch 1, **dadurch gekennzeichnet, dass** der Boden (4) nach unten in Richtung des vertieften Bodenteils (4-1) abfällt und/oder der vertiefte Bodenteil (4-1) nach unten in Richtung des lokal vertieften Bodenumfangs (4-2) abfällt.

3. Fütterungssystem nach Anspruch 1 oder 2, **dadurch gekennzeichnet, dass** der Halter (1) so gekippt werden kann oder gekippt wird, dass der Boden (4) nach unten in Richtung des vertieften Bodenteils (4-1) abfällt.

4. Fütterungssystem nach einem der Ansprüche 1 bis 3, **dadurch gekennzeichnet, dass** der Verbindungsflansch (6) der Zitze (2) derart geformt ist, dass der Verbindungsflansch (6) in dem Hohlraum (7) vertieft ist und den Hohlraum vollständig ausfüllt.

5. Fütterungssystem nach Anspruch 4, **dadurch gekennzeichnet, dass** der in den Hohlraum (7) eingesetzte Verbindungsflansch (6) der Zitze (2) an der Wand (3) des Halters (1) eine Fläche bildet, welche im Wesentlichen in einer Ebene mit der Fläche der Innenwand (3) des Halters (1) liegt.

6. Fütterungssystem nach einem der Ansprüche 1 bis 5, **dadurch gekennzeichnet, dass** die Zitze (2) eine Einbuchtung (8) aufweist, welche zwischen einer in Umfangsrichtung radial vorstehenden Verdickung (9) und dem Verbindungsflansch (6) der Zitze (2) angeordnet ist, und dass die Innenwand (3) des Halters (1) um die Öffnung (5) herum einen, vorzugsweise abnehmbaren, dichten Sitz in der Einbuchtung (8) bildet.

7. Fütterungssystem nach einem der Ansprüche 1 bis 6, **dadurch gekennzeichnet, dass** die Zitze (2) an der Stelle des Saugendes (2-1) mit einem Ventil oder einer Absperrung versehen ist, welche von einem saugenden Tier betätigt werden kann.

8. Fütterungssystem nach einem der Ansprüche 1 bis 7, **dadurch gekennzeichnet, dass** der Halter (1) aus Kunstharz oder Gummi und die Zitze (2) aus einem elastischen Kunstharz oder Gummi hergestellt ist.

## Revendications

1. Système d'alimentation pour animaux comprenant :
- un contenant (1) pour l'alimentation liquide comprenant au moins une paroi (3) et un fond sous-jacent (4) ayant une partie inférieure évidée (4-1) qui s'étend aussi loin que la circonférence inférieure (4-2), ladite paroi (3) ayant une ouverture (5) qui est partiellement adjacente à ladite partie inférieure évidée (4-1), et
- au moins une tétine (2) ayant un passage vers une extrémité d'aspiration (2-1), laquelle tétine (2) doit être montée dans ladite ouverture (5) et est positionnée par rapport à ladite partie inférieure évidée (4-1), de sorte que tout aliment collecté sur ladite partie inférieure évidée (4-1) peut s'écouler par le passage vers l'extrémité d'aspiration (2-1) de la tétine,
- dans lequel ladite paroi (3) autour de l'ouverture (5) est prévue avec une cavité (7) au niveau de la paroi intérieure (3) du contenant (1) dans lequel une bride de raccordement (6) de la tétine (2) située à l'opposé de l'extrémité d'aspiration (2-1) de ladite tétine (2), doit être montée,
**caractérisé en ce que** la bride de raccordement (6) de la tétine (2) insérée dans la cavité (7) a une partie circonférentielle plate (6-2) qui repose sur la partie inférieure évidée (4-1).

2. Système d'alimentation selon la revendication 1,
**caractérisé en ce que** le fond (4) s'incline vers le bas vers la partie inférieure évidée (4-1) et/ou ladite partie inférieure évidé (4-1) s'incline vers le bas vers une circonférence inférieure localement évidée (4-2).

3. Système d'alimentation selon la revendication 1 ou 2,
**caractérisé en ce que** le contenant (1) peut être incliné ou est incliné de sorte que le fond (4) s'incline vers le bas vers la partie inférieure évidée (4-1).

4. Système d'alimentation selon l'une quelconque des revendications 1 à 3, **caractérisé en ce que** la bride de raccordement (6) de la tétine (2) est formée de sorte que ladite bride de raccordement (6) est enfoncée dans la cavité (7) et remplit complètement ladite cavité.

5. Système d'alimentation selon la revendication 4,
**caractérisé en ce que** la bride de raccordement (6) de la tétine (2) insérée dans la cavité (7) forme une surface au niveau de ladite paroi (3) du contenant (1) qui est sensiblement dans un plan avec la surface de la paroi intérieure (3) du contenant (1).

6. Système d'alimentation selon l'une quelconque des revendications 1 à 5, **caractérisé en ce que** la tétine (2) a une indentation (8) qui est prise en sandwich entre un épaississement faisant saillie circonférentiellement de manière radiale (9) et la bride de raccordement (6) de la tétine (2), et, autour de l'ouverture (5), la paroi intérieure (3) du contenant (1) est un raccord étanche imperméable aux fuites, de préférence détachable, dans ladite indentation (8).

7. Système d'alimentation selon l'une quelconque des revendications 1 à 6, **caractérisé en ce que**, à l'emplacement de l'extrémité d'aspiration (2-1), la tétine (2) est prévue avec une valve ou un dispositif d'arrêt qui peut être actionné(e) par un animal qui aspire.

8. Système d'alimentation selon l'une quelconque des revendications 1 à 7, **caractérisé en ce que** le contenant (1) est réalisé avec de la résine synthétique ou du caoutchouc, et la tétine (2) est réalisée avec une résine synthétique élastique ou du caoutchouc.
